# EUROPEAN PATENT SPECIFICATION

(11) **EP 4 423 021 B1**
(45) Date of publication and mention of the grant of the patent: **02.07.2025**
(21) Application number: 22813108.2
(22) Date of filing: 26.10.2022
(51) Int. Cl.: C02F 1/461, C02F 1/467, C25B 1/26, C25B 11/052, C25B 11/091

(54) **ELECTRODE FOR HYPOCHLORITE EVOLUTION**
ELEKTRODE ZUR HYPOCHLORITENTWICKLUNG
ÉLECTRODE POUR L'ÉVOLUTION D'HYPOCHLORITE

(30) Priority: 27.10.2021 IT 202100027536
(43) Date of publication of application: 04.09.2024
(73) Proprietor: Industrie De Nora S.P.A., 20134 Milano (IT)
(72) Inventor: RAMUNNI, Anna, 20134 Milan (IT); KATO, Akihiro, Fujisawa City, Kanagawa Pref. 252 (JP); CAZZANIGA, Cristina, 20134 Milan (IT)
(74) Representative: Reitstötter Kinzebach
(86) International application number: PCT/EP2022/079965
(87) International publication number: WO 2023/073037

(56) References cited:
- US-A1- 2005 211 553
- US-A1- 2017 067 172
- US-A1- 2020 407 249

## Description

### FIELD OF THE INVENTION

The invention concerns an electrode for hypochlorite evolution and a method for producing the same.

### BACKGROUND OF THE INVENTION

Electrodes for hypochlorite evolution, used alone or in conjunction with other processes (UV, Ozone), may be advantageously employed in cells and systems for water treatment applications. In particular, these electrodes can be successfully used in the field of domestic water disinfection, including pools and toilets. The US Patent Application Publication US 2020/0407249 A1 discloses such an electrode for electrochlorination processes and a method for producing the same.

In the instances above, the water to be treated is usually tap water and serves as the electrolyte. Tap water is characterized by a high electrical resistivity, usually well above 1000 Ω, because of the very low concentration of chloride ions (≤ 10 ppm) dissolved therein. Under these conditions, when the operating current density of the cell increases above a certain threshold, oxygen evolution reactions start taking place at the anode, as the competing chlorine evolution reaction is limited by the mass transport of the chloride ions. The production of oxygen eventually contributes to electrode corrosion, thereby limiting its efficiency and lifetime.

Moreover, water hardness may cause scale formation on the electrode surface, which negatively affects the hypochlorite production efficiency of the cell and therefore requires periodic cleaning of the electrode.

In order to circumvent this issue, domestic disinfection applications usually employ a bipolar and symmetric electrode pack, i.e. identical anode-cathode pairs undergoing polarity inversion to obtain an effective "self-cleaning" system.

This operating condition is however very detrimental for the catalytic coating of the electrode, if present, since it speeds up its deactivation and delamination process.

Electrodes coated with high quantities of Group 9 noble metals elements (such as more than 10 g/m² of Ir and Rh oxide) have shown good resistance to corrosion and exhibit satisfactory free available chlorine (FAC) efficiency (30%). However, the high quantities of rare and particularly expensive materials required to achieve good results represent a deterrent from a commercial and industrial standpoint, because of the related procurement issues, price fluctuations, scarcity and overall costs.

On the other side, more affordable Ru-Ti oxide active coating compositions exhibit a satisfactory behavior when subject to polarity reversal operations but are unstable towards oxygen corrosion.

It is therefore desirable to have electrodes for hypochlorite evolution which may withstand the demanding operating conditions that can be found in domestic water disinfection applications (or other applications characterized by a high electrolyte resistivity), while still maintaining an industrial and commercial appeal in respect of the amount of rare noble metals used.

### DESCRIPTION OF THE INVENTION

Purpose of the present invention is to overcome the shortcomings of the electrodes for hypochlorite evolution known in the art, especially when subject to polarity reversal conditions and high resistance electrolytes such as tap water.

As previously discussed, electrodes provided with catalytic coatings containing high quantities and high loading of rare noble metals, such as group 9 noble metals (i.e. iridium and/or rhodium), exhibit good resistance to corrosion, whereas active coating compositions containing ruthenium and titanium oxides exhibit a satisfactory behavior when subject to polarity reversal conditions.

It has often been observed that mixing iridium oxide with ruthenium oxide may provide a material with the stability of iridium oxide but is significantly cheaper. This effect is likely due to a shift of oxidation potentials caused by band mixing and is referred to as partialisation of iridium with ruthenium.

However, the inventors observed that in the present case the mere combination of Ru-Ti compositions with compositions comprising Ir, and optionally Rh, does not yield to satisfactory results, since the resulting mixture does not produce a stable or controllable material. Phase segregation is observed at various Ru:Ir proportions, and the coating thus obtained is not satisfactorily durable. Therefore, the creation of a Ru:Ti matrix, which is often exploited in electrochemistry to obtain a material with the stability of iridium oxide at a lower price point, does not ensure the required robustness in this case.

Surprisingly, the inventors noted that when the two compositions are applied separately and sequentially, in one or more layers subject to thermal decomposition, the resulting electrode exhibits improved resistance to corrosion and increased FAC. The catalytically coated electrode obtained via this technique, as may be inferred via a standardless semiquantitative SEM/EDAX analysis with ZAF correction, does not exactly reflect the presence of the two distinct alternating compositions used in the manufacturing method. While the presence of a plurality of layers may be visually suggested in certain SEM images, eventually the elements of the two distinct coating compositions intermingle and diffuse differently across the active coating thickness. Several factors may contribute to this effect: their different crystalline affinities, and/or their molecular weight, and the sequential and specific thermal treatment performed during preparation. The result is a varying and unexpected profile in the concentration of the elements of the final overall coating, as can be observed by scanning the coating composition from the electrode substrate to the outer surface with a semiquantitative standardless EDAX SEM measurement.

This complex and specific composition profile imparted by the preparation method used has been observed to unequivocally contribute to the electrode performance. Therefore, it may be concluded that the electrode performance in the targeted applications does not only depend on the elements present in the active coating but is related to the specific properties that are conveyed to the electrode via the preparation method used, and by the consequent distribution of the elements within the active coating.

Under one aspect, the present invention relates to a method for producing an electrode suitable for hypochlorite evolution in tap water. The method comprises at least two sequential stages (I) and (II).

The first stage (I) comprises the execution of steps a)-b), as defined below, over a valve metal substrate.

Step a) involves applying a first active coating ("A" for brevity), comprising at least one layer of a first composition containing precursors of Ta and Ir having the following weight percentage referred to the elements: 20-70% Ta, 30-80% Ir. Each layer is dried for 5-15 minutes at 45-75°C and subsequently baked for 5-15 minutes at 480 -530°C. Other precursors may be present in the first composition. For instance, precursors of Rh, Pt, Nb and/or W may be successfully used.

Step b) involves applying a second active coating ("B" for brevity) over coating A. Coating B comprises at least one layer of a second composition including precursors of Ru and Ti having the following weight percentage referred to the elements: 20-50% Ru, 50-80% Ti.

Each layer is dried for 5-15 minutes at 45-75°C and subsequently baked for 5-15 minutes at 480 -530°C.

In this first stage (I), steps a) and b) shall be performed at least once.

The second stage (II) comprises the execution of step a) as above described over the electrode resulting from stage (I), and optionally performing a postbake at 480-530 °C for 1-6 hours.

The electrode is therefore prepared according to the following coating sequence: A-B-A, or A-B-A-B-A, or A-B-A-B-A-B-A, etc... with a total number of coatings A and B that may preferably range, for practical reasons, from 3 to 31. This number corresponds to executing steps a)-b) in stage (I) between 1 and 15 times.

Semiquantitative standardless EDAX SEM measurements on the resulting electrode shows that the separate coating compositions A and B used in the manufacturing method are not clearly identifiable as separate (multi-)layers in the overall final coating, yet the distribution of the elements also differs from the one that may be obtained by simply applying a mixture of both the first and second compositions. Furthermore, it has been shown that also the order in which the two compositions are applied imparts a measurable effect on the electrode performance (i.e. the sequence should preferably start and end with coating A), as will be illustrated in the forthcoming examples.

The inventors have observed that when steps a)-b) in stage (I) are executed 1-6 times, the electrode thus obtained performs particularly well in the execution of the invention.

The method according to the invention does not exclude the application of additional coating compositions, such as a barrier coating composition over the electrode substrate, before the application of coating A, or a top coating composition after stage (II), or other compositions in between the different stages and steps.

During each single execution of step a), in both stage (I) and (II), and of step b) in stage (I), the number of layers of the corresponding active coating may vary, as well as the total noble metal load.

Preferably, the skilled person may tailor according to general knowledge the number of steps executed, the pick-up and load of each layer and the number of layers, until reaching an overall final coating thickness of at least 10 microns, even more preferably between 10 and 30 microns.

The electrode may therefore be prepared according to the following coating sequence: A*ₙ*-B*ₘ*-A*_{q}* or A*ₙ-*B*ₘ-*A*ₒ-*B*ₚ-* ....-A*_{q},* where *n, m, o, p, q* indicate the number of layers in which each coating A and B is applied, and these numbers may differ from each other.

In order to optimally balance the protective effect of the active coating in contact with the substrate against corrosion while reducing the total amount of noble metal used, it may be advantageous to execute step a) by applying the first active coating in a number of layers between 1 and 4, and to execute step b) by applying the second active coating in a number of layers between 2 and 10.

According to one embodiment, the number of layers of the second active coating is preferably higher than the number of layers of the first active coating.

Preferably, the noble metal load of the second active coating is higher than the noble metal load of the first active coating; even more preferably, the noble metal load of the second active coating is higher than the noble metal load of the first active coating by a factor of 2-10.

The skilled person understands that steps a) and b) of stage (I) and (II) may be performed until reaching a desired total noble metal load.

According to another embodiment, the total load of rare noble metals, i.e. noble metals belonging to group 9 of the periodic table, is preferably equal to 2-6 g/m² in the overall final electrode.

Under another embodiment, the precursors of Ta and Ir in the first composition may be advantageously selected within the following ranges: 20-45% Ta and 55-80% Ir. In this instance, the composition may or may not contain further metal precursors. In the latter case, the preparation of the electrode is simplified. Furthermore, the procurement of the materials required for the electrode preparation is less subject to uncertainty in regard to price fluctuations and availability of metal precursors, especially when rare and/or noble metals are concerned. The resulting electrode advantageously matches the performance of prior art electrodes with a much higher noble metal load.

Under another embodiment, the first composition preferably further contains precursors of Rh, with the precursors of Ta, Ir and Rh having the following weight ratio referred to the elements: 20-45% Ta, 30-70% Ir, 10-25 % Rh. The presence of rhodium further improves durability of the electrode.

Advantageously, in this embodiment, the total load of Ir + Rh for step a) may be preferably chosen between 1-3 g/m².

According to another embodiment, the total load of Ir + Rh in the overall final electrode may be preferably chosen to be equal to 2-6 g/m².

In general, for step b), the total load of Ru may be advantageously chosen between 5-10 g/m².

The electrode substrate may be made of any suitable conductive material, preferably a valve metal, such as titanium or alloys thereof. The substrate may come in different geometrical shapes, i.e., any of those shapes that may be used for in electrochlorination applications, including meshes, sheets, blades, tubes or wire shapes.

Regardless of the substrate material and shape, the surface of such substrate may advantageously be a cleaned surface. This may be obtained by any of the treatments known in the art. Additionally, the cleaned surface may be further treated for enhanced adhesion of the active coating compositions. This may be achieved by any usual means, including intergranular etching of the substrate metal, sharp grit blasting of the metal surface, or plasma spraying, followed by surface treatment to remove embedded grit.

To further increase the durability of the material, it is preferred that the valve metal substrate be sandblasted and then etched, in order to obtain a better roughness and therefore a better adhesion.

According to a further embodiment of the method according to the present invention, the second active composition further comprises a precursor solution of one or more doping agents collectively identified as "X", where X is between 0,5-5 % expressed in weight percentage referred to the elements, and chosen from the following list: scandium, strontium, hafnium, bismuth, zirconium, aluminum, and combinations thereof.

The resulting X-doped composition may provide an efficiency boost in the low salinity conditions at which the electrode may typically operate.

According to a further embodiment of the method according to the present invention, the second active composition may further comprise a precursor solution of one or more doping agents collectively identified as "Y", where Y is between 0,2-3,2% in weight percentage referred to the elements, and is chosen from the following list: copper, platinum and combinations thereof.

The resulting Y-doped composition has been observed to provide improved robustness to polarity inversion.

The X- and Y-doping of the second active composition are not mutually exclusive: they may be executed together or separately.

As previously discussed, the multilayer preparation method of alternate coating compositions according to the invention yields an electrode that exhibits higher resistance to corrosion as well as higher FAC efficiency with respect to other methods deploying the same materials and amount of rare noble metals from group 9. The method also provides an electrode with high resistance to polarity inversion, which can be exploited for self-cleaning of symmetric electrode packages undergoing current reversal, without detriment in performance.

As discussed, the electrode obtainable with the present method achieves measurably improved performance with respect to an electrode prepared with the same materials applied together from the start, instead as the alternate and distinct layers of different compositions hereinbefore described. The unique effect of the specific thermal treatment applied to the two coating compositions, the order, number and alternance of the layers, combined with the intrinsic different volatility of the elements, provides a product with unique characteristics and performance.

Indeed, certain elements of the first and second composition distribute rather uniformly along the overall catalytic coating thickness, while others mostly concentrate/deplete closer to the substrate, and/or at the top, but are nevertheless subject to fluctuations that are hardly predictable as they likely depend on a large variety of parameters, such as, without limitation: the number of times stage (I) is executed, the number of layers used in each of steps a) and b), as well as their thickness and/or metal load. This distribution of elements in the final product does not retain a straightforward link to the A-B-... -A pattern executed during the electrode preparation.

Therefore, the distribution of the elements in the overall final electrode coating, while undoubtedly linked to the preparation method, which imparts a measurable effect in the electrode performance, is impossible to be defined without reference to said method unless unduly restricting the scope of the claims.

Therefore, under a second aspect, the present invention relates to the electrode obtainable according to any of the embodiments of the method above described. This electrode exhibits improved or comparable lifetime and improved chlorine evolution efficiency with respect to the electrodes known in the art, by employing in comparison a reduced amount of total load of noble metal elements belonging to group 9, which are scarce and costly and subject to dramatic price fluctuations and availability issues, thanks to the properties imparted by the method used.

It shall be understood that this invention covers all electrodes with similar features of the aforementioned electrode, regardless of the preparation method used.

While, as explained, the above electrode cannot be adequately defined in terms of its structural/material characteristics alone without undue restriction, the inventors have surprisingly observed that certain particularly advantageous embodiments presented common features in the distribution of the elements through the coating thickness, as described below.

Under a third aspect, the present invention relates to an electrode with improved lifetime and chlorine evolution efficiency which may be obtained with the method according to the invention and suitable for water disinfection, particularly tap water. The electrode comprises a valve metal substrate, preferably made of Ti or alloys thereof, and an active coating applied over said substrate characterized in that said coating has an average thickness "T" between 10-30 microns and comprises metal oxides of Ti, Ta, Ir, Ru and optionally Rh according to the following relative weight percentages referred to the elements: Ir 4-35%, Ta 1,5-22,5%, Ru 10-45,5%, Ti 25-75% and optionally Rh 0,5-12,5%. The metals diffuse across the entire thickness T, but their relative weight percentage varies with the coating thickness so that:
- Ir, Ta, and Rh, if present, exhibit a peak in weight percentage centered at 2-25% of the coating thickness T, starting from the substrate, with a FWHM of 1-10% of T;
- Ru exhibits an increase in weight percentage until reaching 10-40% of the coating thickness T, where it substantially stabilizes (i.e. does it does not present any systematic peaks or dips in weight percentage, instrumental errors notwithstanding, and does not fluctuate, on average more than three times its average value as measured between 25%-100% of T, starting from the substrate).

The weight percentage is measured by performing an average on the sample of standardless semiquantitative EDAX-SEM line scans with a ZAF correction, and each line scan is performed over at least 100 acquisition points along the thickness T of the catalytic coating. For each point, the sum of the weight percentage of all the elements present in the catalytic coating is normalized to 100%. The average on the sample should be measured by considering an appropriate number of line scans measured on different areas of the electrode. The appropriate number of line scans is dependent on the overall size and homogeneity of the sample, as the skilled person may appreciate.

It shall be understood that such line scans inherently present fluctuations due to defects or pores in the catalytic coating, precision and sensitivity of the instrument, impurities, etc...

By peak it is meant a relative or absolute maximum that may be roughly fitted by a gaussian or a skewed normal and is characterized by the full width at half maximum (FWHM) hereinbefore described.

The weight percentage calculated in correspondence with said peak should be at least 3 times the average value measured at a distance Z from the position of the peak in the direction towards the external surface of the active coating (furthest from the substrate), with Z = 1,75*FWHM - 2,75*FWHM.

It is noted that other structural/chemical properties may be imparted by the preparation method according to the invention besides what is captured by the SEM/EDAX measurement above described.

Under a third aspect, the invention relates to a bipolar electrolyser employing the electrode described in the above aspects and embodiments. Preferably, the bipolar electrolyser employs an electrolyte that substantially consists of tap water. Advantageously, the electrolyser employs at least one pair of identical electrodes, where each electrode is one of the electrodes according to the invention as hereinbefore described.

Under a fourth aspect, the invention relates to the use of the bipolar electrolyser according to the invention for hypochlorite mediated water disinfection.

### BRIEF DESCRIPTION OF THE DRAWINGS

In the drawings:
Figure 1, panel a), represents a SEM image of a sample prepared according to the method described in Example 1. Panel b) plots a standardless semiquantitative EDAX-SEM line scan performed on the same sample, along the line indicated in panel a);
Figure 2, panel a), represents a SEM image of a sample prepared according to the method described in Example 2. Panel b) plots a standardless semiquantitative EDAX-SEM line scan performed on the same sample, along the line indicated in panel a);
Figure 3, panel a), represents a SEM image of a sample prepared according to the method described in Counterexample 1. Panel b) plots a standardless semiquantitative EDAX-SEM line scan performed on the same sample, along the line indicated in panel a).

### DETAILED DESCRIPTION OF THE DRAWINGS

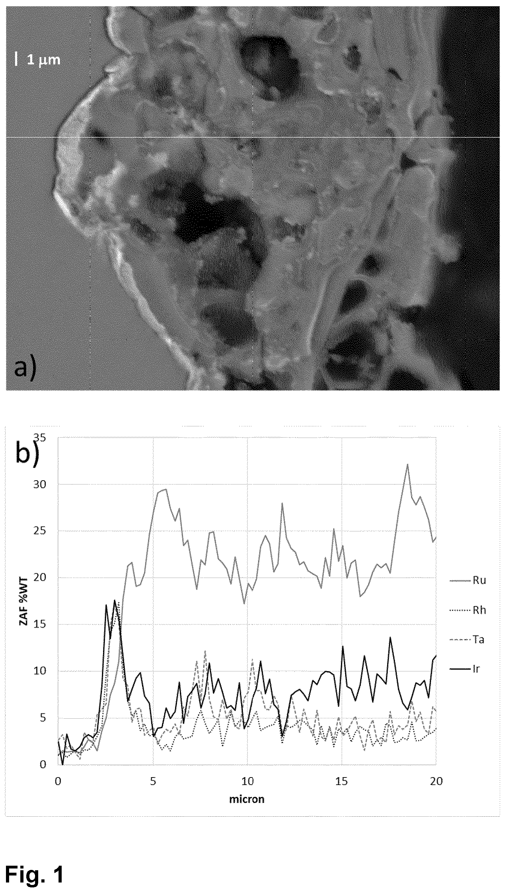

Figure 1, panel a), represents a SEM image of a sample prepared according to the method described in Example 1, i.e. by executing stage (I) once, following an application pattern of the type "A-B-A". The coating had an average thickness of 20 microns.

Panel b), which refers to the same sample, plots a standardless semiquantitative EDAX-SEM line scan performed over 100 acquisition points along the line indicated in panel a). ZAF corrections are applied to the EDAX measurements. For each point, the sum of the weight percentage of all the elements present in the catalytic coating is normalized to 100%. For clarity, only Ru, Rh, Ta and Ir measurements are shown.

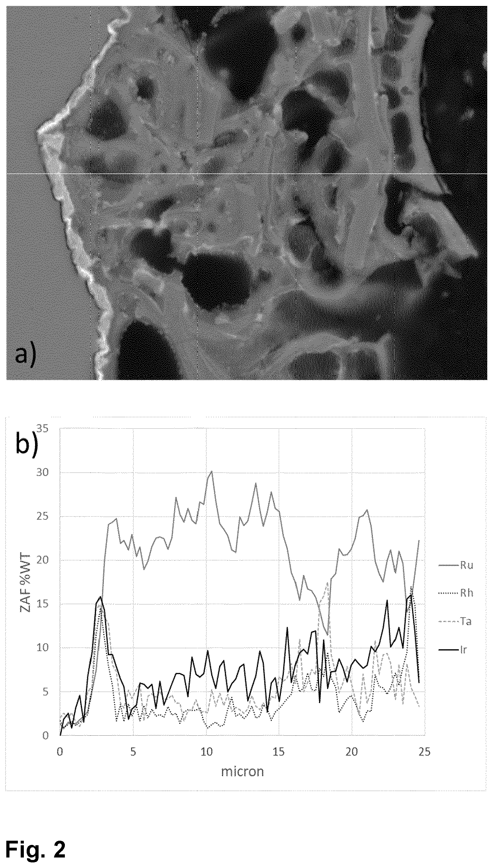

Figure 2, panel a), represents a SEM image of a sample prepared according to the method described in Example 2, i.e. by executing stage (I) three times, following an application pattern of the type "A-B-A-B-A-B-A". The coating exhibited an average thickness of 20 microns.

Panel b), which refers to the same sample, plots a standardless semiquantitative EDAX-SEM line scan performed over 100 acquisition points along the line indicated in panel a). ZAF corrections are applied to the EDAX measurements. For each point, the sum of the weight percentage of all the elements present in the catalytic coating is normalized to 100%. For clarity, only Ru, Rh, Ta and Ir measurements are shown.

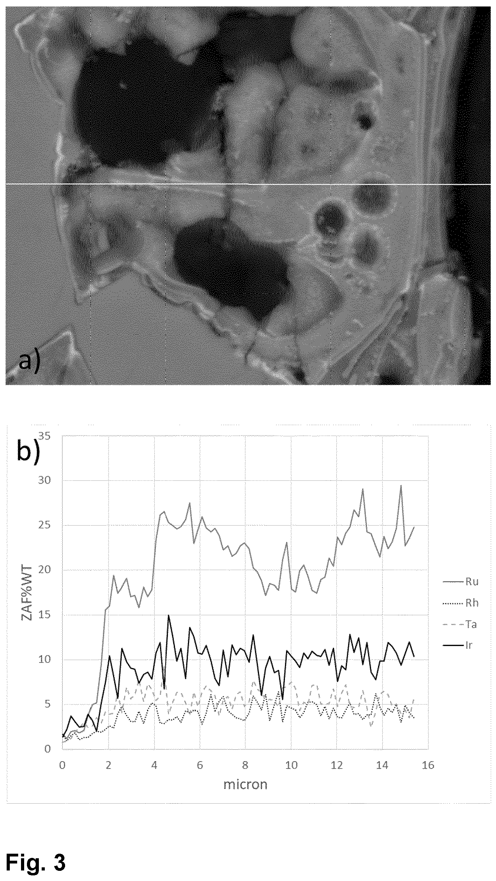

Figure 3, panel a), represents a SEM image of a sample prepared according to the method described in Counterexample 1, i.e. by mixing together compositions A and B and applying the solution in layers until obtaining a coating of average thickness of 20 microns.

Panel b), which refers to the same sample, plots a standardless semiquantitative EDAX-SEM line scan performed over 100 acquisition points along the line indicated in panel a). ZAF corrections are applied to the EDAX measurements. For each point, the sum of the weight percentage of all the elements present in the catalytic coating is normalized to 100%. For clarity, only Ru, Rh, Ta and Ir measurements are shown.

It is possible to note how the claimed method affects the distribution of the semiquantitative weight percentage of Ir, Rh and Ta content within the resulting coating, by favoring a relative increase in concentration of these elements in the proximity of the electrode substrate.

The figures discussed above show the impact of the preparation method used on the structure and concentration of the elements within the final coating, while the following examples further show how the method impacts on the electrode performance.

The following examples are included to demonstrate particular ways of reducing the invention into practice, whose practicability has been largely verified in the claimed range of values.

It should be appreciated by those of skill in the art that the equipment, compositions and techniques disclosed in the following represent equipment, compositions and techniques discovered by the inventors to function well in the practice of the invention; however, those of skill in the art should, in light of the present disclosure, appreciate that many changes can be made in the specific embodiments which are disclosed and still obtain a like or similar result without departing from the scope of the invention.

### EXAMPLES

### EXPERIMENT PREPARATION

In all the electrode samples used in the following EXAMPLES and COUNTEREXAMPLES, the electrode substrate was manufactured starting from a titanium grade 1 plate of 100 mm x 100 mm x 1 mm size, degreased with acetone in an ultrasonic bath for 10 minutes. The plate was then subjected to grit blasting to obtain a surface roughness value Rz above 2 µm, and was subsequently annealed for 6 hours at 650 °C. Finally, the plate was etched in a solution containing 22% by weight of HCl at boiling temperature for 30 minutes, resulting in a total weight loss of 200 g/m².

All percentages are expressed by weight unless otherwise indicated.

### EXAMPLE 1

A pair of electrodes E1-E1 was prepared according to the following procedure:
Each electrode substrate, prepared according to the "Experiment Preparation" described above, was coated with a first active coating "A₁" obtained by applying by brush 2 layers of a first hydrochloride precursor solution "S_{A}" of 30% tantalum, 50% iridium and 20% rhodium in 10% HCl. Each single layer was dried for 10 minutes at 60°C and subsequently baked for 10 minutes at 500°C. The load of Ir-Rh was of 2 g/m².

After the first active coating "A₁" thus obtained was applied, each electrode was coated with a second active coating "B₁" obtained by applying by brush a hydrochloride precursor solution "S_{B}" of 65% titanium, 30% ruthenium, 1% copper and 4% zirconium in 10% HCL. The coating was applied in 9 layers and each layer was dried for 10 minutes at 60°C and subsequently baked for 10 minutes at 500 °C; The load of ruthenium was of 9 g/m².

Finally, a third coating equal to the first coating "A₁" described above, was applied on top of coating "B₁".

Each E1 electrode was further a baked at 500 °C for 3 hours.

The resulting final coating, measured with SEM microscopy, was 20 microns thick on average. An image is provided in Figure 1.

The lifetime of the electrode pair E1-E1 was tested in accelerated conditions by subjecting the electrodes to frequent polarity inversion compared to nominal conditions and at a current density > 7 A/dm².

Both electrodes were inserted in a dedicated beaker containing 1 I of circulating tap water (max 10 ppm CI), at room temperature. The pair was kept in testing conditions and considered failed when the measured hypochlorite generation efficiency is below 0.5 ppm.

### EXAMPLE 2

A pair of electrodes E2-E2 was prepared according to the following procedure:
Each electrode substrate, prepared according to the "Experiment Preparation" described above, was coated with a first active coating "A₂" obtained by applying by brush one layer of the first precursor solution "S_{A}" detailed in Example 1. The layer was dried for 10 minutes at 60°C and subsequently baked for 10 minutes at 500°C. The load of Ir-Rh was of 1 g/m².

After the first active coating "A₂" thus obtained was applied, each electrode was coated with a second active coating "B₂" obtained by applying the precursor solution "S_{B}" described in Example 1. The coating was applied by brush in 3 layers and each layer was dried for 10 minutes at 60°C and subsequently baked for 10 minutes at 500 °C; The load of ruthenium was of 3 g/m².

Overall, the coating sequence above was performed three times and ended with the application of one last "A₂" coating (thereby following a pattern A₂- B₂- A₂- B₂- A₂- B₂- A₂). Each E2 electrode was further a baked at 500 °C for 3 hours.

The resulting final coating, measured with SEM microscopy, was 20 microns thick on average. A SEM image is provided in Figure 2.

The electrode pair E2-E2 was tested according to the procedure of Example 1, and the lifetime results are provided in TABLE 1.

### EXAMPLE 3

A pair of electrodes E3-E3 was prepared according to the following procedure:
Each electrode substrate, prepared according to the "Experiment Preparation" described above, was coated with a first active coating "A₃" obtained by applying by brush 2 layers of a first hydrochloride precursor solution "S_{A}" of 35% tantalum and 65% iridium in 10% HCl. Each single layer was dried for 10 minutes at 60°C and subsequently baked for 10 minutes at 500°C. The load of Ir was of 2 g/m².

After the first active coating "A₃" thus obtained was applied, each electrode was coated with a second active coating "B₃" obtained by applying the precursor solution "S_{B}" described in Example 1. The coating was applied by brush in 9 layers and each layer was dried for 10 minutes at 60°C and subsequently baked for 10 minutes at 500 °C; The load of ruthenium was of 9 g/m².

Overall, the coating sequence above was performed once and ended with the application of one last "A₃" coating (thereby following a pattern A₃- B₃- A₃).

Each E3 electrode was further a baked at 500 °C for 3 hours.

The resulting final coating, measured with SEM microscopy, was 20 microns thick on average.

The electrode pair E3-E3 was tested according to the procedure of Example 1, and the lifetime results are provided in TABLE 1.

### COUNTEREXAMPLE 1

A pair of electrodes C1-C1 was prepared according to the following procedure:
Each electrode substrate, prepared according to the "Experiment Preparation" described above, was coated with an active coating obtained by applying 13 layers by brush of a hydrochloride precursor solution comprising 9.2% tantalum, 15.4% iridium, 6.1% rhodium, 20.8% ruthenium, 45% titanium, 0.7% copper and 2.8% zirconium in 10% HCl. Each layer was dried for 10 minutes at 60°C and subsequently baked for 10 minutes at 500°C. The final load of Ir-Rh-Ru was of 13 g/m².

The resulting final coating, measured with a SEM technique, was 20 microns thick on average. An image is provided in Figure 3.

The electrode pair C1-C1 was tested according to the procedure of Example 1, and the lifetime results are provided in TABLE 1.

### COUNTEREXAMPLE 2

A pair of electrodes C2-C2 was prepared according to the following procedure:
Each electrode substrate, prepared according to the "Experiment Preparation" described above, was coated with a first active coating "A₃" obtained by applying by brush one layer of a first precursor solution "S_{A}" described in Example 1. The layer was dried for 10 minutes at 60°C and subsequently baked for 10 minutes at 500°C. The load of Ir-Rh was of 4 g/m².

After the first active coating "A₃" thus obtained was applied, each electrode was coated with a second active coating "B₃" obtained by applying by brush the precursor solution "S_{B}" described in Example 1. The second active coating was applied in 3 layers and each layer was dried for 10 minutes at 60°C and subsequently baked for 10 minutes at 500 °C; The load of ruthenium was of 9 g/m².

Each electrode was further a baked at 500 °C for 3 hours.

The resulting final coating, measured with SEM microscopy, was 20 microns thick on average.

The electrode pair C2-C2 was tested according to the procedure of Example 1, and the lifetime results are provided in TABLE 1.

### COUNTEREXAMPLE 3

A pair of electrodes C3-C3 was prepared according to the following procedure:
Each electrode substrate, prepared according to the "Experiment Preparation" described above, was coated with an active coating obtained by applying by brush 6 layers of an hydrochloride precursor solution comprising 30% tantalum, 50% iridium and 20% rhodium in 10% HCL. Each layer was dried for 10 minutes at 60°C and subsequently baked for 10 minutes at 500°C. The final load of Ir-Rh was of 12 g/m².

The resulting final coating, measured with SEM microscopy, was 20 microns thick on average.

The electrode pair C3-C3 was tested according to the procedure of Example 1, and the lifetime results are provided in TABLE 1.

**TABLE 1**

| Electrode pairs | Load (g/m²) | Accelerated lifetime (h) |
|---|---|---|
| E1-E1 | Ir+Rh: 4; Ru: 9 | 811 |
| E2-E2 | Ir+Rh: 4; Ru: 9 | 874 |
| E3-E3 | Ir: 4; Ru: 9 | 800 |
| C1-C1 | Ir+Rh+Ru: 13 | 264 |
| C2-C2 | Ir+Rh: 4; Ru: 9 | 400 |
| C3-C3 | Ir+Rh: 12 | 800 |

## Claims

1. A method for producing an electrode for hypochlorite evolution comprising at least two sequential stages (I) and (II):
(I) executing the following steps a)-b) at least once over a valve metal substrate:
a) apply a first active coating comprising at least one layer of a first composition, where said first composition comprises precursors of Ta and Ir having the following weight ratio referred to the elements: 20-70% Ta, 30-80% Ir, and where each layer is dried for 5-15 minutes at 45-75°C and subsequently baked for 5-15 minutes at 480 -530°C;
b) apply a second active coating comprising at least one layer of a second composition over said first active coating, where said second composition comprises precursors of Ru and Ti having the following weight ratio referred to the elements: 20-50% Ru, 50-80% Ti, and where each layer is dried for 5-15 minutes at 45-75°C and subsequently baked for 5-15 minutes at 480 - 530°C;
(II) executing step a) over the electrode resulting from stage (I), and optionally performing a postbake at 480-530 °C for 1-6 hours.

2. The method according to claim 1 wherein the first active coating composition further comprises a precursor solution of Rh, and where the precursors of Ta, Ir and Rh have the following weight ratio referred to the elements: 20-45% Ta, 30-70% Ir, 10-25 % Rh.

3. The method according to claim 1 wherein the precursors of Ta and Ir in the first active coating composition have the following weight ratio referred to the elements: 20-45% Ta, 55-80% Ir.

4. The method according to any one of claims 1 - 3 wherein the first active coating is applied in 1-4 layers and the second active coating is applied in 2-10 layers.

5. The method according to any one of claims 1 - 4 wherein the second active composition further comprises a precursor solution of one or more doping agents X chosen from the following list: scandium, strontium, hafnium, bismuth, zirconium, aluminum, and combinations thereof, and X is between 0,5-5 % expressed in weight percentage referred to the elements.

6. The method according to any one of claims 1 - 5 wherein the second active composition further comprises a precursor solution of one or more doping agents Y chosen from the following list: copper, platinum and combinations thereof, and Y is between 0,2-3,2% expressed in weight percentage referred to the elements.

7. The method according to any one of claims 1 - 6 where in stage (I) steps a)-b) are consecutively executed 1-6 times before stage (II).

8. The method according to claim 2 wherein stage (I) and (II) are performed until reaching a total load of group 9 noble metal elements of 2-6 g/m².

9. The electrode obtainable with the method according to any one of claims 1-8.

10. An electrode for hypochlorite evolution comprising a valve metal substrate, preferably made of Ti or alloys thereof, and an active coating applied over said substrate **characterized in that** said coating has an average thickness "T" between 10-30 microns and comprises metal oxides of Ti, Ta, Ir, Ru and optionally Rh according to the following relative weight percentages referred to the elements: 4-35% Ir, 1,5-22,5% Ta, 10-45,5% Ru, 25-75% Ti, and optionally 0,5-12,5% Rh and the relative weight percentage of Ta, Ir, Ru and optionally Rh varies with the coating thickness so that:
- Ir, Ta, and Rh, if present, exhibit a peak in weight percentage centered at 2-25% of the coating thickness T, starting from the substrate, with a FWHM of 1-10% of T;
- Ru increases in weight percentage until reaching 10-40% of the coating thickness T, where it substantially stabilizes;
said weight percentage being measured by performing on the sample an average of standardless semiquantitative EDAX-SEM line scans, where each line scan is performed over at least 100 acquisition points along the thickness T of the catalytic coating, with a ZAF correction.

11. A bipolar electrolyser comprising the electrode according to claim 9 or 10 and an electrolyte.

12. The bipolar electrolyser according to claim 11 wherein the electrolyte substantially consists of tap water.

13. Use of the bipolar electrolyser according to claim 11 or 12 for hypochlorite mediated water disinfection.

## Patentansprüche

1. Verfahren zur Herstellung einer Elektrode zur Hypochloritentwicklung, umfassend mindestens zwei aufeinanderfolgende Stufen (I) und (II):
(I) mindestens einmalige Durchführung der folgenden Schritte a)-b) auf einem Ventilmetall-Substrat:
a) Aufbringen einer ersten aktiven Beschichtung, die mindestens eine Schicht einer ersten Zusammensetzung umfasst, wobei die erste Zusammensetzung Vorläufer von Ta und Ir mit dem folgenden Gewichtsverhältnis bezogen auf die Elemente umfasst: 20-70 % Ta, 30-80 % Ir, und wobei jede Schicht 5-15 Minuten bei 45-75 °C getrocknet und anschließend 5-15 Minuten bei 480-530 °C gebrannt wird;
b) Aufbringen einer zweiten aktiven Beschichtung, die mindestens eine Schicht einer zweiten Zusammensetzung umfasst, auf die erste aktive Beschichtung, wobei die zweite Zusammensetzung Vorläufer von Ru und Ti mit dem folgenden Gewichtsverhältnis bezogen auf die Elemente umfasst: 20-50 % Ru, 50-80 % Ti, wobei jede Schicht 5-15 Minuten bei 45-75 °C getrocknet und anschließend 5-15 Minuten bei 480-530 °C gebrannt wird;
(II) Durchführen des Schritts a) auf der aus Stufe (I) resultierenden Elektrode und gegebenenfalls Durchführen eines Nachbrennens bei 480-530 °C für 1-6 Stunden.

2. Verfahren gemäß Anspruch 1, wobei die erste aktive Beschichtungszusammensetzung ferner eine Vorläuferlösung von Rh umfasst und wobei die Vorläufer von Ta, Ir und Rh das folgende Gewichtsverhältnis bezogen auf die Elemente aufweisen: 20-45 % Ta, 30-70 % Ir, 10-25 % Rh.

3. Verfahren gemäß Anspruch 1, wobei die Vorläufer von Ta und Ir in der ersten aktiven Beschichtungszusammensetzung das folgende Gewichtsverhältnis bezogen auf die Elemente aufweisen: 20-45 % Ta, 55-80 % Ir.

4. Verfahren gemäß einem der Ansprüche 1 bis 3, wobei die erste aktive Beschichtung in 1 bis 4 Schichten und die zweite aktive Beschichtung in 2 bis 10 Schichten aufgebracht wird.

5. Verfahren gemäß einem der Ansprüche 1 bis 4, wobei die zweite aktive Zusammensetzung ferner eine Vorläuferlösung eines oder mehrerer Dotierungsmittel X umfasst, die aus der folgenden Liste ausgewählt sind: Scandium, Strontium, Hafnium, Bismut, Zirkonium, Aluminium und Kombinationen davon, und X zwischen 0,5 und 5 % liegt, ausgedrückt in Gewichtsprozent bezogen auf die Elemente.

6. Verfahren gemäß einem der Ansprüche 1 bis 5, wobei die zweite aktive Zusammensetzung ferner eine Vorläuferlösung eines oder mehrerer Dotierungsmittel Y umfasst, die aus der folgenden Liste ausgewählt sind: Kupfer, Platin und Kombinationen davon, und Y zwischen 0,2 und 3,2 % beträgt, ausgedrückt in Gewichtsprozent bezogen auf die Elemente.

7. Verfahren gemäß einem der Ansprüche 1 bis 6, wobei in Stufe (I) die Schritte a) bis b) vor Stufe (II) 1 bis 6 Mal nacheinander durchgeführt werden.

8. Verfahren gemäß Anspruch 2, wobei die Stufen (I) und (II) durchgeführt werden, bis eine Gesamtbeladung mit Edelmetallelementen der Gruppe 9 von 2 bis 6 g/m2 erreicht ist.

9. Elektrode, die mit dem Verfahren gemäß einem der Ansprüche 1 bis 8 erhältlich ist.

10. Elektrode zur Hypochloritentwicklung, umfassend ein Ventilmetallsubstrat, vorzugsweise aus Ti oder Legierungen davon, und eine aktive Beschichtung, die auf das Substrat aufgebracht ist, **dadurch gekennzeichnet, dass** die Beschichtung eine durchschnittliche Dicke "T" zwischen 10 und 30 Mikrometern aufweist und Metalloxide von Ti, Ta, Ir, Ru und gegebenenfalls Rh gemäß den folgenden relativen Gewichtsprozenten bezogen auf die Elemente umfasst: 4-35 % Ir, 1,5-22,5 % Ta, 10-45,5 % Ru, 25-75 % Ti und optional 0,5-12,5 % Rh, wobei der relative Gewichtsanteil von Ta, Ir, Ru und optional Rh mit der Beschichtungsdicke variiert, sodass
- Ir, Ta und Rh, falls vorhanden, einen Spitzenwert in Gewichtsprozent aufweisen, der bei 2-25 % der Schichtdicke T, beginnend vom Substrat, mit einer FWHM von 1-10 % von T zentriert ist;
- Ru in Gewichtsprozent bis zum Erreichen von 10-40 % der Schichtdicke T ansteigt, wo es sich im Wesentlichen stabilisiert;
wobei der Gewichtsprozentanteil durch Durchführung einer durchschnittlichen standardlosen semiquantitativen EDAX-SEM-Linienabtastung an der Probe gemessen wird, wobei jede Linienabtastung über mindestens 100 Erfassungspunkte entlang der Dicke T der katalytischen Beschichtung mit einer ZAF-Korrektur durchgeführt wird.

11. Bipolarer Elektrolyseur, der die Elektrode gemäß Anspruch 9 oder 10 und einen Elektrolyten umfasst.

12. Bipolarer Elektrolyseur gemäß Anspruch 11, wobei der Elektrolyt im Wesentlichen aus Leitungswasser besteht.

13. Verwendung des bipolaren Elektrolyseurs gemäß Anspruch 11 oder 12 zur hypochloritvermittelten Wasserdesinfektion.

## Revendications

1. Procédé de production d'une électrode pour le dégagement d'hypochlorite, comprenant au moins deux étapes successives (I) et (II) :
(I) exécuter les étapes a)-b) suivantes au moins une fois sur un substrat métallique à valve :
a) appliquer un premier revêtement actif comprenant au moins une couche d'une première composition, où ladite première composition comprend des précurseurs de Ta et d'Ir ayant le rapport pondéral suivant par rapport aux éléments : 20-70% de Ta, 30-80% d'Ir, et où chaque couche est séchée pendant 5-15 minutes à 45-75°C et ensuite cuite pendant 5-15 minutes à 480-530°C ;
b) appliquer un deuxième revêtement actif comprenant au moins une couche d'une deuxième composition sur ledit premier revêtement actif, où ladite deuxième composition comprend des précurseurs de Ru et de Ti ayant le rapport pondéral suivant par rapport aux éléments : 20-50% de Ru, 50-80% de Ti, et où chaque couche est séchée pendant 5-15 minutes à 45-75°C et ensuite cuite pendant 5-15 minutes à 480-530°C ;
(II) exécuter l'étape a) sur l'électrode résultant de l'étape (I), et effectuer éventuellement une post-cuisson à 480-530°C pendant 1-6 heures.

2. Procédé selon la revendication 1, dans lequel la première composition de revêtement actif comprend en outre une solution de précurseur de Rh, et où les précurseurs de Ta, Ir et Rh ont le rapport pondéral suivant par rapport aux éléments : 20-45% de Ta, 30-70% d'Ir, 10-25% de Rh.

3. Procédé selon la revendication 1, dans lequel les précurseurs de Ta et d'Ir dans la première composition de revêtement actif ont le rapport pondéral suivant par rapport aux éléments : 20-45% de Ta, 55-80% d'Ir.

4. Procédé selon l'une quelconque des revendications 1 - 3, dans lequel le premier revêtement actif est appliqué en 1 à 4 couches et le deuxième revêtement actif est appliqué en 2 à 10 couches.

5. Procédé selon l'une quelconque des revendications 1 - 4, dans lequel la deuxième composition active comprend en outre une solution de précurseur d'un ou plusieurs agents dopants X choisis parmi la liste suivante : scandium, strontium, hafnium, bismuth, zirconium, aluminium, et leurs combinaisons, et X est compris entre 0,5 et 5%, exprimé en pourcentage en poids par rapport aux éléments.

6. Procédé selon l'une quelconque des revendications 1 - 5, dans lequel la deuxième composition active comprend en outre une solution de précurseur d'un ou plusieurs agents dopants Y choisis parmi la liste suivante : cuivre, platine et leurs combinaisons, et Y est compris entre 0,2 et 3,2%, exprimé en pourcentage en poids par rapport aux éléments.

7. Procédé selon l'une quelconque des revendications 1 - 6, où dans l'étape (I), les étapes a)-b) sont exécutées consécutivement 1 à 6 fois avant l'étape (II).

8. Procédé selon la revendication 2, dans lequel les étapes (I) et (II) sont effectuées jusqu'à ce que la charge totale des éléments de métaux nobles du groupe 9 atteigne de 2-6 g/m².

9. Electrode pouvant être obtenue par le procédé selon l'une quelconque des revendications 1-8.

10. Electrode pour le dégagement d'hypochlorite, comprenant un substrat métallique à valve, de préférence en Ti ou en alliages de Ti, et un revêtement actif appliqué sur ledit substrat, **caractérisée en ce que** ledit revêtement a une épaisseur moyenne « T » comprise entre 10 et 30 microns et comprend des oxydes métalliques de Ti, Ta, Ir, Ru et éventuellement de Rh selon les pourcentages en poids relatifs suivants, rapportés aux éléments : 4-35% d'Ir, 1,5-22,5% de Ta, 10-45,5% de Ru, 25-75% de Ti, et éventuellement 0,5-12,5% de Rh, et le pourcentage en poids relatif de Ta, Ir, Ru et éventuellement de Rh varie en fonction de l'épaisseur du revêtement de sorte que :
- Ir, Ta et Rh présentent, s'ils sont présents, un pic en pourcentage en poids centré sur 2-25% de l'épaisseur T du revêtement, à partir du substrat, avec un FWHM de 1-10% de T :
- le pourcentage en poids de Ru augmente jusqu'à atteindre 10-40% de l'épaisseur T du revêtement, où il se stabilise substantiellement ;
ledit pourcentage en poids étant mesuré en réalisant sur l'échantillon une moyenne de balayages linéaires EDAX-SEM semi-quantitatifs sans support, où chaque balayage linéaire est réalisé sur au moins 100 points d'acquisition le long de l'épaisseur T du revêtement catalytique, avec une correction ZAF.

11. Electrolyseur bipolaire comprenant l'électrode selon la revendication 9 ou 10 et un électrolyte.

12. Electrolyseur bipolaire selon la revendication 11, dans lequel l'électrolyte est essentiellement constitué d'eau du robinet.

13. Utilisation de l'électrolyseur bipolaire selon la revendication 11 ou 12 pour la désinfection de l'eau à l'hypochlorite.
